# EUROPEAN PATENT SPECIFICATION

(11) **EP 4 318 388 B1**
(45) Date of publication and mention of the grant of the patent: **07.01.2026**
(21) Application number: 21942970.1
(22) Date of filing: 26.05.2021
(51) Int. Cl.: G06N 3/063, G06N 3/0464, G06T 7/70, G06V 10/82, G06V 10/94, G06V 20/00

(54) **OBJECT DETECTION DEVICE, OBJECT DETECTION METHOD, AND OBJECT DETECTION PROGRAM**
OBJEKTERKENNUNGSVORRICHTUNG, OBJEKTERKENNUNGSVERFAHREN UND OBJEKTERKENNUNGSPROGRAMM
DISPOSITIF, PROCÉDÉ ET PROGRAMME DE DÉTECTION D'OBJET

(43) Date of publication of application: 07.02.2024
(73) Proprietor: NTT, Inc., Tokyo 100-8116 (JP)
(72) Inventor: HATTA, Saki, Musashino-shi, Tokyo 180-8585 (JP); UZAWA, Hiroyuki, Musashino-shi, Tokyo 180-8585 (JP); YOSHIDA, Shuhei, Musashino-shi, Tokyo 180-8585 (JP); KOBAYASHI, Daisuke, Musashino-shi, Tokyo 180-8585 (JP); OMORI, Yuya, Musashino-shi, Tokyo 180-8585 (JP); NAKAMURA, Ken, Musashino-shi, Tokyo 180-8585 (JP); NITTA, Koyo, Musashino-shi, Tokyo 180-8585 (JP)
(74) Representative: DREISS Patentanwälte PartG mbB
(86) International application number: PCT/JP2021/019953
(87) International publication number: WO 2022/249316

(56) References cited:
- JP-A- 2018 124 681
- MATTHIEU COURBARIAUX ET AL: "Training deep neural networks with low precision multiplications", CORR (ARXIV), vol. 1412.7024, no. v5, 23 September 2015 (2015-09-23), pages 1 - 10, XP055566721
- GUO JIUN-IN ET AL: "Hybrid Fixed-Point/Binary Deep Neural Network Design Methodology for Low-Power Object Detection", IEEE JOURNAL ON EMERGING AND SELECTED TOPICS IN CIRCUITS AND SYSTEMS, IEEE, PISCATAWAY, NJ, USA, vol. 10, no. 3, 12 August 2020 (2020-08-12), pages 388 - 400, XP011810152, ISSN: 2156-3357, [retrieved on 20200918], DOI: 10.1109/JETCAS.2020.3015753
- KLUSKA PIOTR ET AL: "Post-training Quantization Methods for Deep Learning Models", 4 March 2020, 20200304, PAGE(S) 467 - 479, XP047545244
- HAN DONGHYEON ET AL: "HNPU: An Adaptive DNN Training Processor Utilizing Stochastic Dynamic Fixed-Point and Active Bit-Precision Searching", IEEE JOURNAL OF SOLID-STATE CIRCUITS, IEEE, USA, vol. 56, no. 9, 23 March 2021 (2021-03-23), pages 2858 - 2869, XP011874674, ISSN: 0018-9200, [retrieved on 20210825], DOI: 10.1109/JSSC.2021.3066400
- NA TAESIK ET AL: "On-chip training of recurrent neural networks with limited numerical precision", 2017 INTERNATIONAL JOINT CONFERENCE ON NEURAL NETWORKS (IJCNN), IEEE, 14 May 2017 (2017-05-14), pages 3716 - 3723, XP033112510, DOI: 10.1109/IJCNN.2017.7966324
- HATTA, SAKI ET AL.: "Dynamic Fixed-point Control Method for Object- detection A1 Inference Hardware", PROCEEDINGS OF THE 2020 IEICE ENGINEERING SCIENCES SOCIETY / NOLT A SOCIETY CONFERENCE, 1 September 2020 (2020-09-01), pages 33

## Description

### Technical Field

The technology disclosed herein relates to an object detection device, an object detection method, and an object detection program.

### Background Art

Various data processing techniques using multilayer neural networks and deep learning have been developed. The application range of such techniques is expanding to various fields such as recognition and detection. For example, object detection is a technique for detecting, from an input image, metadata including the positions (rectangular frames surrounding objects) and the attributes (types of objects such as people or cars) of objects included in the input image, and the recognition accuracy of each object. As for object detection, YOLO (You Only Look Once) (see Non Patent Literature 1), SSD (Single Shot Multibox Detector) (see Non Patent Literature 2), and the like that detect metadata on the basis of results of deep learning have been disclosed recently, and applications of them to object detection systems that require real-time properties, such as automatic driving and a monitoring camera, are being considered.

From the viewpoint of network traffic load distribution and security protection, mounting an object detection device such as an automatic driving and a monitoring camera on an edge of a network, or a terminal side, has also been considered. To mount an object detection device on an edge of a network, it is necessary to reduce the size and power consumption of the device.

To achieve size reduction and lower power consumption, a configuration has been suggested, to implement an object detection process based on deep learning with hardware, and reduce the data bit width of all the data to be handled by an arithmetic unit (see Non Patent Literature 3). Examples of the data include an input, an output (feature map), a weight (kernel), and a bias. In a case where a deep learning inference process is performed with software, all the data to be used in a product-sum operation is normally treated as 32-bit floating-point data. This is because a possible range of the value of each piece of data is wide, and the range is different for each image or for each layer such as a convolution layer in a convolutional neural network. In Non Patent Literature 3, it is reported that the effect of reducing the circuit scale and power can be obtained by determining the data bit width in each layer of the convolutional neural network beforehand using statistical information, and reducing the data bit width to 8 to 16 bits.

Further, for these approaches, there is a disclosed method by which each data width is uniformly set to a fixed-point number of n bits (n < 32), and the decimal point position is dynamically controlled for each input image and for each layer (see Non Patent Literature 4). In the object detection device according to Non Patent Literature 4, the decimal point position is dynamically changed for each input image and for each layer, so that the value range is changed in accordance with the tendency of a calculation result for each layer, and degradation of recognition accuracy is reduced. A conventional configuration includes a decimal point position control unit that determines a decimal point position for each layer, and an upper limit/lower limit counter, in addition to an object detection calculation unit that performs an inference process. The upper limit/lower limit counter is a counter that measures, for each layer, the number of times a detection result exceeds the upper limit value (all bits being 1) of the value range (upper limit saturation), and the number of times a detection result falls below the lower limit value (only the least significant bit being 1), during an arithmetic process in object detection. The same threshold (UPₜₕ/UNₜₕ) of the upper limit/lower limit counter is set for all input images for each layer, a layer exceeding the threshold is set as a layer to be subjected to a decimal point position change, and the decimal point position is adjusted so that the counter value falls within the threshold.
Non Patent Literature 1: Joseph Redmon et.al, "YOLOv3: An Incremental Improvement", https://arxiv.org/abs/1804.02767
Non Patent Literature 2: Wei Liu et.al, "SSD: Single Shot MultiBox Detector", https://arxiv.org/pdf/1512.02325.pdf
Non Patent Literature 3: Zhisheng Li et.al, "Laius: An 8-Bit Fixed-Point CNN Hardware Inference Engine" 2017 IEEE International Symposium on Parallel and Distributed Processing with Applications and 2017 IEEE International Conference on Ubiquitous Computing and Communications (ISPA/IUCC), Guangzhou, 2017, pp. 143-150, doi: 10.1109/ISPA/IUCC.2017.00030.
Non Patent Literature 4: Saki Hatta, Hiroyuki Uzawa, Shuhei Yoshida, and Koyo Nitta, "Dynamic Fixed-point Control Method for Object-detection AI Inference Hardware", The Institute of Electronics, Information and Communication Engineers, September 2020
MATTHIEU COURBARIAUX ET AL: "Training deep neural networks with low precision multiplications", CORR (ARXIV), vol. 1412.7024, no. v5, 23 September 2015 (2015-09-23), pages 1-10, XP055566721 discloses training deep neural networks with low precision multipliers and high precision accumulators.
GUO JIUN-IN ET AL: "Hybrid Fixed-Point/Binary Deep Neural Network Design Methodology for Low- Power Object Detection", IEEE JOURNAL ON EMERGING AND SELECTED TOPICS IN CIRCUITS AND SYSTEMS, IEEE, PISCATAWAY, NJ, USA, vol. 10, no. 3, 12 August 2020 (2020-08-12), pages 388-400, XP011810152, ISSN: 2156-3357, DOI: 10.1109/JETCAS.2020.3015753 [retrieved on 2020-09-18] proposes a hybrid fixed point/binary deep neural network design methodology for object detection to achieve low-power consumption by taking advantage of both the fixed-point and binary deep neural networks, which allocates enough bit-width to design the hardware datapath in different layers of deep neural network.
KLUSKA PIOTR ET AL: "Post-training Quantization Methods for Deep Learning Models", 4 March 2020 (2020-03-04), 20200304, PAGE(S) 467- 479, XP047545244, [retrieved on 2020-03-04] discloses a comprehensive study on post-training quantization methods for convolutional neural networks in two challenging tasks: classification and object detection. Furthermore, a novel method is introduced that quantizes every single layer to the smallest bit width, which does not introduce accuracy degradation.
HAN DONGHYEON ET AL: "HNPU: An Adaptive DNN Training Processor Utilizing Stochastic Dynamic Fixed-Point and Active Bit-Precision Searching", IEEE JOURNAL OF SOLID-STATE CIRCUITS, IEEE, USA, vol. 56, no. 9, 23 March 2021 (2021-03-23), pages 2858-2869, XP011874674, ISSN: 0018-9200, DOI: 10.1109/JSSC.2021.3066400 [retrieved on 2021-08-25] discloses an energy-efficient deep neural network (DNN) training processor by adopting algorithm-hardware co-design.

### Summary of Invention

### Technical Problem

However, superiority/inferiority of an object detection result such as a detection accuracy is determined by the balance between the number of saturation layers, which is the number of layers in which the upper limit saturation occurs, and the average number of saturations. Even if the average number of saturations is reduced, a detection result is degraded in a case where the number of saturation layers increases due to a decimal point position change. By the conventional method, the threshold is common to all input images. Therefore, the number of saturation layers increases depending on images, and degradation of a detection result cannot be reduced.

The technology disclosed herein has been made in view of the above aspects, and aims to provide an object detection device, an object detection method, and an object detection program capable of reducing degradation of accuracy of a result of object detection performed on an input image.

### Solution to Problem

The invention is defined by the appended independent claims. Further embodiments are defined by the appended dependent claims.

### Advantageous Effects of Invention

According to the technology disclosed herein, it is possible to reduce degradation of the accuracy of results of object detection performed on an input image.

### Brief Description of Drawings

Fig. 1 is a functional block diagram of an object detection device according to a first embodiment.
Fig. 2 is a diagram illustrating the hardware configuration of the object detection device.
Fig. 3 is a flowchart of an object detection process according to the first embodiment.
Fig. 4 is a diagram for explaining the upper limit number of saturation layers before and after a change in a decimal point position according to a conventional technology.
Fig. 5 is a diagram for explaining the upper limit number of saturation layers before and after a change in a decimal point position according to the technology disclosed herein.
Fig. 6 is a functional block diagram of an object detection device according to a second embodiment.
Fig. 7 is a flowchart of an object detection process according to the second embodiment.

### Description of Embodiments

The following is a description of an example of embodiments of the technology disclosed herein, with reference to the drawings. In the drawings, the same or equivalent components and portions are denoted by the same reference signs.

### <First Embodiment>

An object detection device according to a first embodiment is a device that detects metadata including the position, the attribute, and the detection accuracy of each of the objects included in an input image. Here, the position of an object is represented by at least one of the coordinates of the center of the object or a rectangular frame (bounding box) surrounding the object in the input image, for example. Also, the attribute of the object is the type of the object such as a person or a vehicle, and may be referred to as a category. Further, the recognition accuracy of the object is a probability that the detected object has a specific attribute, for example.

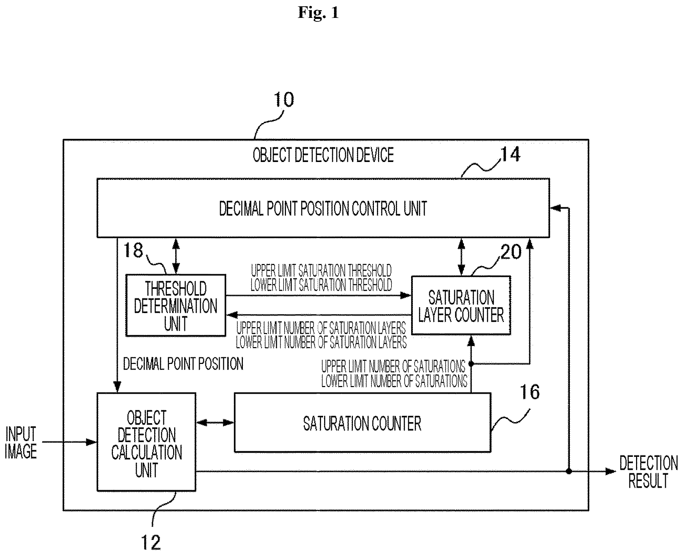

As illustrated in Fig. 1, an object detection device 10 according to the first embodiment includes an object detection calculation unit 12, a decimal point position control unit 14, a saturation counter 16, a threshold determination unit 18, and a saturation layer counter 20.

The object detection calculation unit 12 performs an arithmetic process based on a deep learning inference process, on the input image.

Specifically, the object detection calculation unit 12 is an arithmetic processing circuit designed to perform an arithmetic process compatible with each layer in a plurality of layers constituting a multilayer neural network, according to a multilayer neural network processing algorithm. Typically, a convolutional neural network (CNN) is used for the processing by the multilayer neural network in the object detection calculation unit 12.

An outline of the CNN is as follows. The CNN includes: a feature extraction part in which convolution layers that perform a convolution process of convolving a predetermined filter on an input image and pooling layers that perform a pooling process of downsizing a result of the convolution process are alternately arranged to create a feature map; and an identification part that includes a plurality of fully connected layers, and identifies objects included in the input image on the basis of the feature map.

In the feature extraction part, an operation of convolving a filter on an image is performed. Meanwhile, in the identification part, a product-sum operation of multiplying the value of each pixel of the feature map by a weight to obtain a sum, and an operation of adding a bias to the result of the product-sum operation and inputting the result to an activation function to obtain its output are repeatedly performed. Note that a rectified linear unit (ReLU) or the like is used as the activation function. The values of the weight and the parameters of the activation function can be determined by learning.

The object detection calculation unit 12 subjects fixed-length data having a decimal point position set therein to an arithmetic process compatible with each layer in a plurality of layers constituting a multilayer neural network, according to a multilayer neural network processing algorithm. Specifically, the object detection calculation unit 12 performs a convolution operation of an inference process and a combining process using an object detection algorithm based on deep learning, such as YOLO (Non Patent Literature 1) or SSD (Non Patent Literature 2), for example, and outputs metadata such as the position, attribute, and detection accuracy of an object included in the input image as a detection result. Performing many product-sum operations, such an object detection calculation unit 12 is often formed with a multicore CPU or a graphics processing unit (GPU). Note that the object detection calculation unit 12 may be formed with a field programmable gate array (FPGA), for example.

In this embodiment, data that is handled by the object detection calculation unit 12 in each layer in a multilayer neural network, such as an input, an output (feature map), a bias, and a weight, is fixed-length data having a bit width smaller than 32 bits, and has a data structure capable of having a different decimal point position for each layer.

More specifically, in this embodiment, the object detection calculation unit 12 subjects fixed-length data having a bit width of 8 bits, for example, to an arithmetic process corresponding to each layer in the plurality of layers constituting the multilayer neural network. Note that the decimal point position of the data to be handled by the object detection calculation unit 12 is set for each layer by the decimal point position control unit 14 described later.

In a case where the input is 8 bits and the weight is 8 bits in a convolution operation in the object detection calculation unit 12, the result obtained by the product-sum operation is 16 bits at the maximum. The object detection calculation unit 12 adds a bias to the 16-bit calculation result, and applies an activation function, to obtain a 16-bit intermediate input map. Since a feature map is to be the input in the next layer, the 16-bit intermediate input map is reduced to a width of 8 bits, to obtain a feature map for the input to the next layer. Note that the number of layers, the activation function, and the bias addition method are selected as appropriate for each object detection algorithm to be used, and do not limit the technology disclosed herein.

The decimal point position control unit 14 sets the decimal point position of fixed-length data (hereinafter simply referred to as the "decimal point position") to be calculated in the object detection calculation unit 12.

Specifically, on the basis of the output of the object detection calculation unit 12, which is a result of object detection by a multilayer neural network, the decimal point position control unit 14 sets the decimal point position of the fixed-length data to be calculated in the object detection calculation unit 12 for each layer in the plurality of layers constituting the multilayer neural network. The object detection calculation unit 12 is notified of the decimal point position set by the decimal point position control unit 14. On the basis of the notification from the decimal point position control unit 14, the object detection calculation unit 12 changes the decimal point position of the fixed-length data corresponding to each layer in the plurality of layers constituting the multilayer neural network.

The decimal point position control unit 14 determines the decimal point position of each layer, using the detection result output from the object detection calculation unit 12. For example, in a case where an object included in an input image as a video image is detected, the object included in images that are continuously input changes gradually, and it is rare for an object to entirely change in a short time. Therefore, the decimal point position control unit 14 does not set the decimal point position of each layer from the detection result of only one input image, but repeats the process of calculating the decimal point position of each layer using object detection results corresponding to a plurality of input images, to gradually optimize the decimal point position of each layer.

In an arithmetic process by the object detection calculation unit 12, the saturation counter 16 counts, for each layer, the upper limit number of saturations, which is the number of times the upper limit value (all bits being 1) of the value range determined by the decimal point position set by the decimal point position control unit 14 has been exceeded.

Also, in an arithmetic operation by the object detection calculation unit 12, the saturation counter 16 counts, for each layer, the lower limit number of saturations, which is the number of times the lower limit value (only the least significant bit being 1) of the value range determined by the decimal point position set by the decimal point position control unit 14 has not been reached. Hereinafter, the upper limit number of saturations and the lower limit number of saturations will be referred to simply as the numbers of saturations when not distinguished from each other.

The threshold determination unit 18 optimizes the upper limit saturation threshold and the lower limit saturation threshold of the saturation counter 16. Although the details thereof will be described later, the decimal point position control unit 14 sets a decimal point position for each layer in the plurality of layers in the multilayer neural network, on the basis of results of the determination performed by the threshold determination unit 18. Hereinafter, the upper limit saturation threshold and the lower limit saturation threshold will be referred to simply as the thresholds when not distinguished from each other.

The saturation layer counter 20 counts the upper limit number of saturation layers, which is the number of layers in which the upper limit number of saturations counted by the saturation counter 16 is one or larger. The saturation layer counter 20 also counts the lower limit number of saturation layers, which is the number of layers in which the lower limit number of saturations counted by the saturation counter 16 is one or larger. Hereinafter, the upper limit number of saturation layers and the lower limit number of saturation layers will be referred to simply as the numbers of saturation layers when not distinguished from each other.

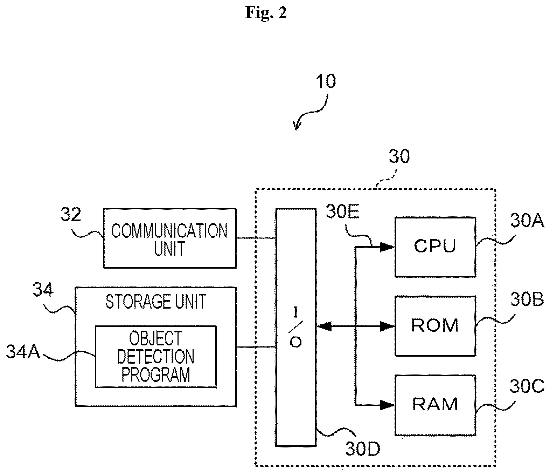

Fig. 2 is a block diagram illustrating the hardware configuration of the object detection device 10. As illustrated in Fig. 2, the object detection device 10 includes a computer 30. The computer 30 includes a central processing unit (CPU) 30A, a read only memory (ROM) 30B, a random access memory (RAM) 30C, and an input/output interface (I/O) 30D. The CPU 30A, the ROM 30B, the RAM 30C, and the I/O 30D are connected to one another via a system bus 30E. The system bus 30E includes a control bus, an address bus, and a data bus.

Also, a communication unit 32 and a storage unit 34 are connected to the I/O 30D.

The communication unit 32 is an interface for performing data communication with an external device.

The storage unit 34 is formed with a nonvolatile storage device such as a hard disk, and stores an object detection program 34A and the like that will be described later. The CPU 30A reads the object detection program 34A stored in the storage unit 34 into the RAM 30C, and executes the program. Note that the storage unit 34 may be a portable storage device detachable from the computer 30, for example.

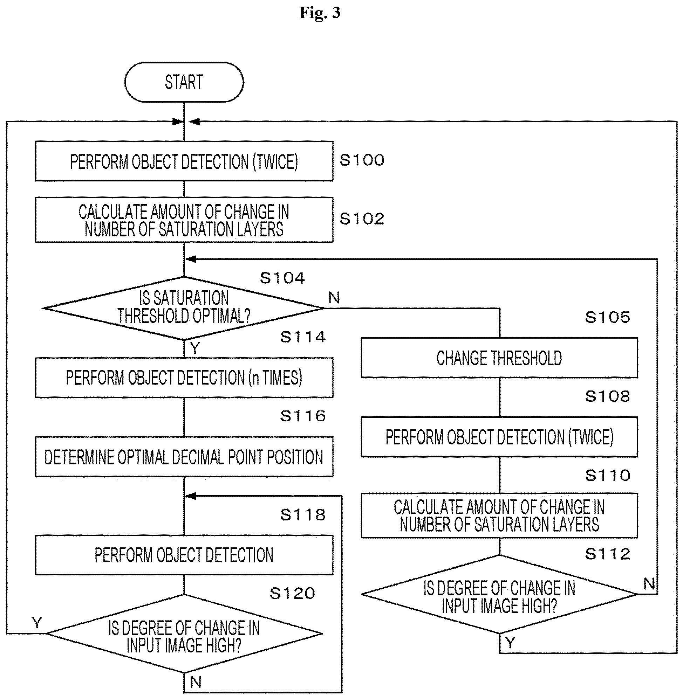

Next, an object detection process to be performed by the object detection device 10 is described with reference to a flowchart shown in Fig. 3.

In step S100, to initialize the decimal point position of each layer, and acquire the amount of change in the upper limit number of saturation layers and the amount of change in the lower limit number of saturation layers between before and after a decimal point position change, the threshold determination unit 18 initializes the upper limit saturation threshold, which is the threshold of the upper limit number of saturations, to a predetermined initial upper limit saturation threshold, initializes the lower limit saturation threshold, which is the threshold of the lower limit number of saturations, to a predetermined initial lower limit saturation threshold, and performs object detection twice. Specifically, in the first object detection, the object detection calculation unit 12 calculates the above-mentioned metadata included in an input image, and outputs the calculated metadata to the saturation counter 16 and the decimal point position control unit 14. Also, the saturation counter 16 counts the upper limit number of saturations and the lower limit number of saturations for each layer, and outputs the counts to the saturation layer counter 20. Note that the upper limit saturation threshold and the lower limit saturation threshold are integers of 0 or greater. Also, the upper limit saturation threshold and the lower limit saturation threshold may be the same value or different values.

The saturation layer counter 20 calculates the upper limit number of saturation layers, which is the number of layers whose upper limit numbers of saturations are one or greater, and the lower limit number of saturation layers, which is the number of layers whose lower limit numbers of saturations are one or greater.

In the second object detection, the decimal point position control unit 14 sets a decimal point position for each layer on the basis of the detection result of the first object detection so that the number of layers whose upper limit numbers of saturations exceeds the upper limit saturation threshold becomes smaller, and the number of layers whose lower limit numbers of saturations exceeds the upper limit saturation threshold becomes smaller. That is, for a layer whose upper limit number of saturations exceeds the upper limit saturation threshold, the decimal point position is set so that the upper limit value of the value range of the layer becomes greater, and, for a layer whose lower limit number of saturations exceeds the lower limit saturation threshold, the decimal point position is set so that the lower limit value of the value range of the layer becomes smaller. In other words, the decimal point position is set so as to widen the value range.

In step S102, the saturation layer counter 20 calculates the amount of change in the upper limit number of saturation layers and the amount of change in the lower limit number of saturation layers, on the basis of the first object detection result and the second object detection result. Here, the amount of change in the upper limit number of saturation layers is the amount of increase in the upper limit number of saturation layers in the second object detection relative to the upper limit number of saturation layers in the first object detection. Also, the amount of change in the lower limit number of saturation layers is the amount of increase in the lower limit number of saturation layers in the second object detection relative to the lower limit number of saturation layers in the first object detection.

In step S104, the threshold determination unit 18 determines whether the amount of change in the upper limit number of saturation layers obtained in step S102 is within an allowable range, which is whether the upper limit saturation threshold is an optimal upper limit saturation threshold. Specifically, in a case where the amount of change in the upper limit number of saturation layers is equal to or smaller than a predetermined upper limit change threshold, the upper limit saturation threshold is determined to be optimal. Here, the upper limit change threshold is an integer of 1 or greater. In a case where the amount of change in the upper limit number of saturation layers is larger than the upper limit change threshold, on the other hand, the upper limit saturation threshold is determined not to be optimal.

Also, the threshold determination unit 18 determines whether the amount of change in the lower limit number of saturation layers obtained in step S102 is within an allowable range, which is whether the lower limit saturation threshold is an optimal lower limit saturation threshold. Specifically, in a case where the amount of change in the lower limit number of saturation layers is equal to or smaller than a predetermined lower limit change threshold, the lower limit saturation threshold is determined to be optimal. Here, the lower limit change threshold is an integer of 1 or greater. **In** a case where the amount of change in the lower limit number of saturation layers is larger than the lower limit change threshold, on the other hand, the lower limit saturation threshold is determined not to be optimal. Note that the upper limit change threshold and the lower limit change threshold are set as appropriate according to a network model, an application, or the like in which the object detection device 10 is used. As described above, the threshold determination unit 18 determines whether the upper limit saturation threshold and the lower limit saturation threshold are optimal, using the amount of change in the upper limit number of saturation layers and the amount of change in the lower limit number of saturation layers in the object detection performed twice by the object detection calculation unit 12.

Further, in a case where at least one of the upper limit saturation threshold or the lower limit saturation threshold is determined not to be optimal, the process moves on to step S105. In a case where both the upper limit saturation threshold and the lower limit saturation threshold are determined to be optimal, the process moves on to step S114.

In step S105, the threshold determination unit 18 changes at least one of the upper limit saturation threshold or the lower limit saturation threshold determined not to be optimal, by increasing the threshold(s) by a predetermined amount, and outputs the resultant value(s) to the saturation counter 16. Here, the value of the increase is an integer of 1 or greater. As described above, in a case where at least one of the upper limit saturation threshold or the lower limit saturation threshold is determined not to be optimal, the threshold determination unit 18 increases at least one of the upper limit saturation threshold or the lower limit saturation threshold determined not to be optimal. Note that the value of the increase by which at least one of the upper limit saturation threshold or the lower limit saturation threshold determined not to be optimal is increased may not be set to the same value for all the layers, but may be set for each of the layers.

Steps S108 and S110 are similar to steps S100 and S102, but differ from these steps in that at least one of the upper limit saturation threshold or the lower limit saturation threshold changed in step S105 is used.

In step S112, the saturation layer counter 20 determines the degree of change in the input image. In this embodiment, the degree of change in the input image is determined from the amount of change in the upper limit number of saturation layers and the lower limit number of saturation layers, taking advantage of the fact that at least one of the upper limit number of saturation layers or the lower limit number of saturation layers may vary depending on the type of the input image even at the same decimal point position.

Specifically, a check is made to determine whether the amount of change in the upper limit number of saturation layers obtained in step S110 is larger than a predetermined upper limit change threshold, and a check is made to determine whether the amount of change in the lower limit number of saturation layers obtained in step S110 is larger than a predetermined lower limit change threshold. Note that the upper limit change threshold and the lower limit change threshold are integers of 1 or greater. In at least one of a case where the amount of change in the upper limit number of saturation layers obtained in step S110 is larger than the upper limit change threshold, or a case where the amount of change in the lower limit number of saturation layers obtained in step S110 is larger than the lower limit change threshold, the degree of change in the input image is determined to be high, and the process then moves on to step S100. Meanwhile, in a case where the amount of change in the upper limit number of saturation layers obtained in step S102 is equal to or smaller than the upper limit change threshold, and the amount of change in the lower limit number of saturation layers obtained in step S102 is equal to or smaller than the lower limit change threshold, the degree of change in the input image is determined not to be high, or the degree of change in the input image is determined to be zero or lower, and the process then moves on to step S104. As described above, the saturation layer counter 20 determines the degree of change in the input image to be high, in at least one of a case where the amount of change in the upper limit number of saturation layers between the previous object detection and the current object detection is larger than the upper limit change threshold, or a case where the amount of change in the lower limit number of saturation layers between the previous object detection and the current object detection is larger than the lower limit change threshold.

As described above, in a case where at least one of the upper limit saturation threshold or the lower limit saturation threshold is not optimal, and the degree of change in the input image is not high, the process of performing object detection by changing at least one of the upper limit saturation threshold or the lower limit saturation threshold is repeated until the upper limit saturation threshold and the lower limit saturation threshold become optimal thresholds.

In a case where the upper limit saturation threshold and the lower limit saturation threshold are determined to be optimal thresholds in step S104, on the other hand, the object detection calculation unit 12 performs object detection n times in step S114. At this stage, the decimal point position control unit 14 changes the decimal point position every time object detection is performed once. Note that n is an integer of 2 or greater.

Specifically, in the object detection, the decimal point position of each layer is changed so that the average value of the upper limit number of saturations and the average value of the lower limit number of saturations of each layer become smaller. That is, for a layer whose calculation result exceeds the upper limit value of the value range of the layer, the decimal point position is moved in a direction in which the calculation result becomes equal to or smaller than the upper limit value. For a layer whose calculation result is smaller than the lower limit value, the decimal point position is moved in a direction in which the calculation result is equal to or greater than the lower limit value. Each of the decimal point positions obtained by performing the object detection n times is stored.

In step S116, the decimal point position control unit 14 determines the optimal decimal point position to be the decimal point position obtained when the best detection result has been obtained, or the decimal point position obtained when object detection is performed with the smallest upper limit number of saturations and the smallest lower limit number of saturations. As described above, in a case where the upper limit saturation threshold and the lower limit saturation threshold are determined to be optimal, the decimal point position control unit 14 sets the decimal point position on the basis of the upper limit number of saturations and the lower limit number of saturations in the object detection performed a plurality of times by the object detection calculation unit 12.

In step S118, the object detection calculation unit 12 performs object detection, using the decimal point position determined in step S116.

In step S120, a check is made to determine whether the degree of change in the input image is high between the input image that was input last time and the input image that has been input this time. This determination is performed in the same manner as the determination in step S112.

In a case where the degree of change in the input image is high, the process moves on to step S100. In a case where the degree of change in the input image is not high, on the other hand, the process returns to step S118, to repeat object detection. That is, the object detection is repeated at the decimal point position determined in step S116, until the degree of change in the input image becomes higher.

As described above, after the upper limit saturation threshold and the lower limit saturation threshold are optimized in the process in steps S104 to S112, the optimal decimal point position is determined in the process in steps S114 and S116. This makes it possible to adjust the balance between the upper limit number of saturations and the lower limit number of saturations that correspond to the input image, and the upper limit number of saturation layers and the lower limit number of saturation layers. Thus, the optimal decimal point position can be determined for each input image among various input images, and degradation of the accuracy of results of object detection can be reduced.

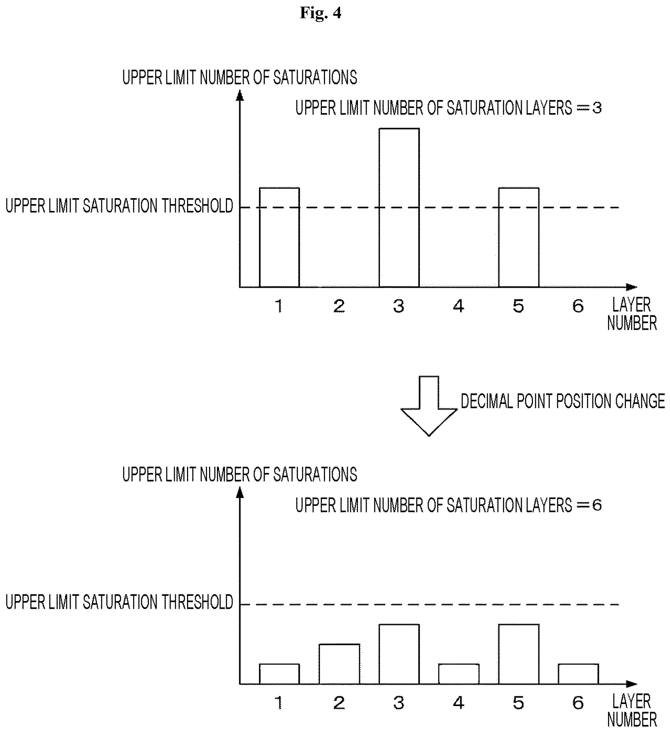

In a case where the number of layers in a multilayer neural network is six, and the upper limit number of saturation layers is three as illustrated in the upper graph in Fig. 4, for example, if the decimal point position is changed for the three layers having layer numbers 1, 3, and 5 in which the upper limit number of saturations exceeds the upper limit saturation threshold as in the technology disclosed in Non Patent Literature 4, the upper limit number of saturations becomes equal to or smaller than the upper limit saturation threshold in all the six layers, but the upper limit number of saturation layers increases to six as illustrated in the lower graph in Fig. 4. For this reason, it is not possible to reduce degradation of the accuracy of results of object detection performed on an input image.

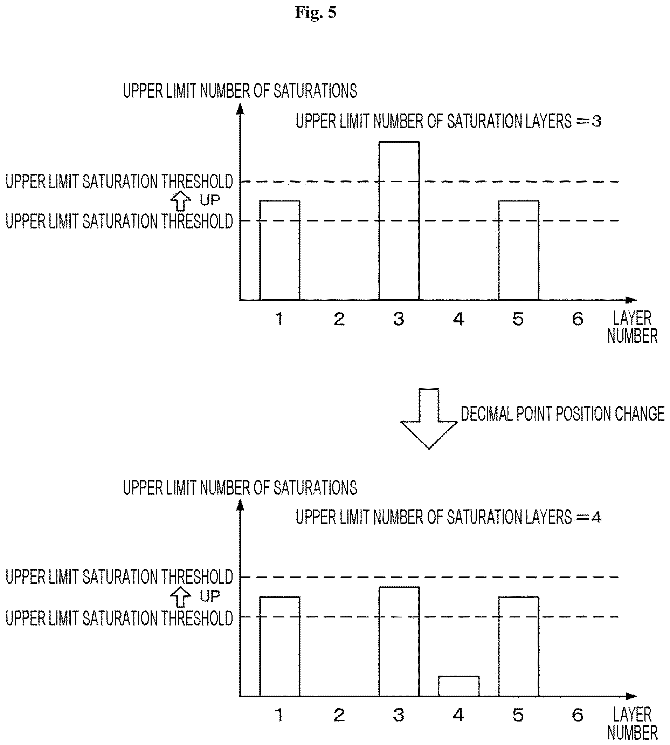

According to the technology disclosed herein, on the other hand, the upper limit saturation threshold is not fixed, but the upper limit saturation threshold is increased in a case where the upper limit saturation threshold is not optimal, as illustrated in Fig. 5. Therefore, as illustrated in the upper graph in Fig. 5, the upper limit number of saturations exceeds the upper limit saturation threshold only for the one layer with layer number 3, and the decimal point position is changed only for this layer. As a result, the upper limit number of saturation layers changes to four as illustrated in the lower graph in Fig. 5, and it is possible to reduce degradation of the accuracy of results of object detection performed on an input image, compared with the case illustrated in Fig. 4.

### <Second Embodiment>

Next, a second embodiment of the technology disclosed herein is described. Note that the same components as those of the first embodiment are denoted by the same reference numerals as those used in the first embodiment, and detailed explanation of them is not made herein.

In the example described in the first embodiment, degradation of detection results is reduced in any input image by a configuration and a method for determining an optimal value of the upper limit threshold, before the decimal point position is changed so as not to exceed the upper limit saturation threshold and the lower limit saturation threshold that are set for each of the layers in a multilayer neural network.

In the first embodiment, however, only at least one of the upper limit saturation threshold or the lower limit saturation threshold is increased in step S105 in Fig. 3. Therefore, in the case of an input image in which an increased threshold is not an optimal threshold, or an optimal threshold cannot be determined, an optimal decimal point position cannot be determined unless the type of the input image changes. When the threshold continues to become greater as above, a state in which the optimal decimal point position is not determined continues.

Therefore, by the method according to this embodiment described below, in a case where an optimal threshold is not determined, a process of making the threshold smaller is additionally performed, so that an optimal decimal point position can be determined even in an input image in which an optimal threshold is not determined only by an increase in the threshold.

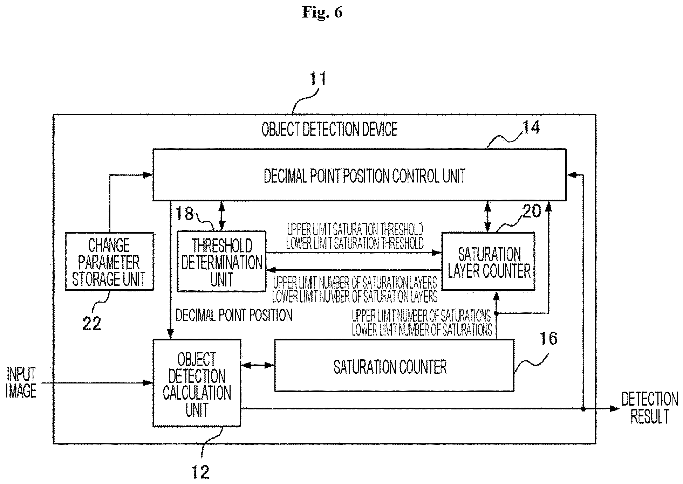

Fig. 6 illustrates the configuration of an object detection device 11 according to this embodiment. The object detection device 11 has the same configuration as the object detection device 10 described in the first embodiment, except for further including a change parameter storage unit 22.

The change parameter storage unit 22 stores change parameters. Here, the change parameters include the number(s) of changes made in at least one of the upper limit saturation threshold or the lower limit saturation threshold determined not to be optimal, and at least one of the amount of change in the upper limit number of saturation layers or the amount of change in the lower limit number of saturation layers when the threshold(s) are determined not to be optimal.

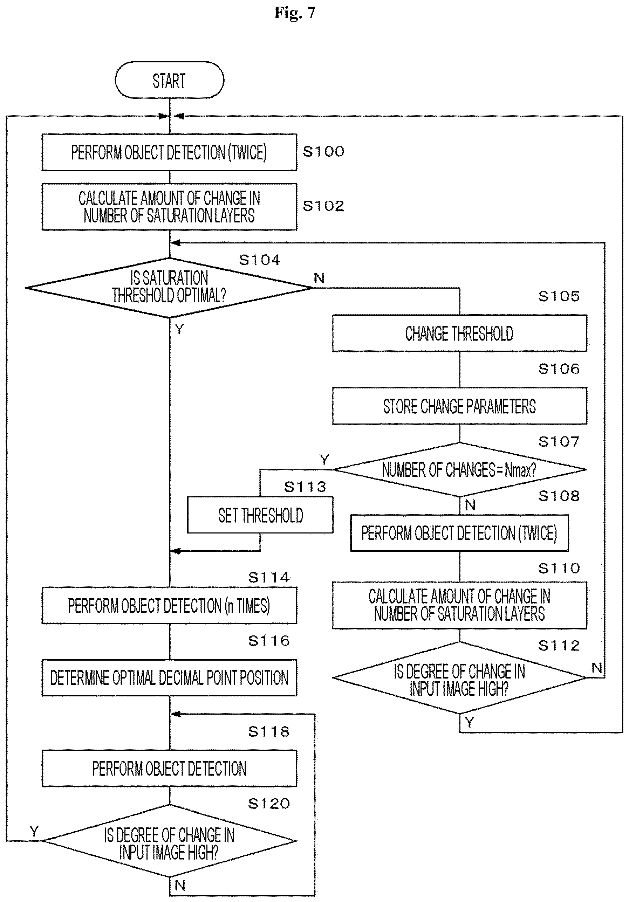

Fig. 7 shows a flowchart of an object detection process according to this embodiment.

The object detection process in Fig. 7 is the same as the object detection process in Fig. 3, except for further including steps S106, S107, and S113.

In step S106, the number(s) of changes made in at least one of the upper limit saturation threshold or the lower limit saturation threshold changed in step S105, and at least one of the amount of change in the upper limit number of saturation layers or the amount of change in the lower limit number of saturation layers determined in step S104 are stored into the change parameter storage unit 22.

In step S107, a check is made to determine whether the number(s) of changes made in at least one of the upper limit saturation threshold or the lower limit saturation threshold stored in step S106 has reached the maximum number of changes Nmax. Note that Nmax is an integer of 1 or greater. In a case where the number(s) of changes in at least one of the upper limit saturation threshold or the lower limit saturation threshold has reached the maximum number of changes Nmax, the process moves on to step S113. In a case where neither of the numbers of changes in the upper limit saturation threshold and the lower limit saturation threshold has reached the maximum number of changes Nmax, the process moves on to step S108.

In step S113, at least one of the upper limit saturation threshold or the lower limit saturation threshold corresponding to at least one of the smallest amount of change in the upper limit number of saturation layers or the smallest amount of change in the lower limit number of saturation layers among at least one of the amounts of change in the upper limit number of saturation layers or the amounts of change in the lower limit number of saturation layers stored into the change parameter storage unit 22 every time the threshold is changed is set.

As described above, in a case where optimal is not obtained even when the number of changes has reached the maximum number of changes Nmax, at least one of the upper limit saturation threshold or the lower limit saturation threshold corresponding to at least one of the smallest amount of change in the upper limit number of saturation layers or the smallest amount of change in the lower limit number of saturation layers among at least one of the amounts of change in the upper limit number of saturation layers or the amounts of change in the lower limit number of saturation layers stored every time the threshold is increased is set. As a result, an optimal decimal point position can be determined even in an input image in which an optimal threshold is not determined only by an increase in the threshold.

Note that, in the above embodiment, the mode in which the object detection program is stored (installed) beforehand in a storage has been described, but the present invention is not limited to this mode. The program may be provided in the form of a program stored in a non-transitory storage medium such as a compact disk read only memory (CD-ROM), a digital versatile disk read only memory (DVD-ROM), or a universal serial bus (USB) memory. Alternatively, the program may be downloaded from an external device via a network.

### Reference Signs List

- 10, 11: Object detection device
- 12: Object detection calculation unit
- 14: Decimal point position control unit
- 16: Saturation counter
- 18: Threshold determination unit
- 20: Saturation layer counter
- 22: Change parameter storage unit
- 30: Computer
- 34A: Object detection program

## Claims

1. An object detection device (10), comprising:
an object detection calculation unit (12) that subjects fixed-length data, in which a decimal point position is set, to arithmetic processing corresponding to respective layers in a plurality of layers configuring a multilayer neural network to which an input image is input, the arithmetic processing being performed in accordance with a processing algorithm for the multilayer neural network;
a saturation counter (16) that counts, in the arithmetic processing, an upper limit number of saturations, which is a number of times that an upper limit value of a value range determined by the decimal point position is exceeded, and a lower limit number of saturations, which is a number of times that a lower limit value of the value range is not reached;
a saturation layer counter (20) that counts an upper limit number of saturation layers, which is a number of layers in which the upper limit number of saturations is one or larger, and a lower limit number of saturation layers, which is a number of layers in which the lower limit number of saturations is one or larger;
a threshold determination unit (18) that determines whether at least one of an upper limit saturation threshold, which is a threshold of the upper limit number of saturations, or a lower limit saturation threshold, which is a threshold of the lower limit number of saturations, is optimal based on an amount of change in the upper limit number of saturation layers and an amount of change in the lower limit number of saturation layers counted by the saturation layer counter, and, when determining that at least one of the upper limit saturation threshold or the lower limit saturation threshold is not optimal, the threshold determination unit changes at least one of the upper limit saturation threshold or the lower limit saturation threshold; and
a decimal point position control unit (14) that sets the decimal point position for each layer in the plurality of layers, based on a result of the determination performed by the threshold determination unit.

2. The object detection device (10) according to claim 1, wherein the threshold determination unit (18) determines whether the upper limit saturation threshold and the lower limit saturation threshold are optimal, using the amount of change in the upper limit number of saturation layers and the amount of change in the lower limit number of saturation layers in object detection performed twice by the object detection calculation unit.

3. The object detection device (10) according to claim 1 or 2, wherein:
when at least one of the upper limit saturation threshold or the lower limit saturation threshold is determined not to be optimal, the threshold determination unit increases the at least one of the upper limit saturation threshold or the lower limit saturation threshold determined not to be optimal, and
when the upper limit saturation threshold and the lower limit saturation threshold are determined to be optimal, the decimal point position control unit sets the decimal point position based on the upper limit number of saturations and the lower limit number of saturations in a plurality of times of object detection performed by the object detection calculation unit (12).

4. The object detection device (10) according to claim 3, wherein the threshold determination unit (18) sets, for each layer in the plurality of layers, an increase value by which the at least one of the upper limit saturation threshold or the lower limit saturation threshold determined not to be optimal is to be increased.

5. The object detection device (10) according to any one of claims 1 to 4, wherein:
in at least one of a case in which the amount of change in the upper limit number of saturation layers between a previous object detection and a current object detection is larger than an upper limit change threshold, or a case in which the amount of change in the lower limit number of saturation layers between the previous object detection and the current object detection is larger than a lower limit change threshold, the saturation layer counter determines that a degree of change in the input image is high, and
when the degree of change in the input image is determined to be high, the threshold determination unit (18) initializes the decimal point position, the upper limit saturation threshold, and the lower limit saturation threshold.

6. The object detection device (10) according to any one of claims 1 to 5, further comprising a change parameter storage unit (22) that stores a number of changes made in the upper limit saturation threshold and the lower limit saturation threshold,
wherein, when the number of changes reaches a predetermined maximum number, the threshold determination unit (18) changes the upper limit saturation threshold and the lower limit saturation threshold to the upper limit saturation threshold and the lower limit saturation threshold with which the amount of change in the upper limit number of saturation layers and the amount of change in the lower limit number of saturation layers are smallest.

7. An object detection method for causing a computer to:
subject fixed-length data, in which a decimal point position is set, to arithmetic processing corresponding to respective layers in a plurality of layers configuring a multilayer neural network to which an input image is input, the arithmetic processing being performed in accordance with a processing algorithm for the multilayer neural network;
in the arithmetic processing, count an upper limit number of saturations, which is a number of times that an upper limit value of a value range determined by the decimal point position is exceeded, and a lower limit number of saturations, which is a number of times that a lower limit value of the value range is not reached;
count an upper limit number of saturation layers, which is a number of layers in which the upper limit number of saturations is one or larger, and a lower limit number of saturation layers, which is a number of layers in which the lower limit number of saturations is one or larger;
change at least one of an upper limit saturation threshold, which is a threshold of the upper limit number of saturations or a lower limit saturation threshold, which is a threshold of the lower limit number of saturations, when at least one of the upper limit saturation threshold or the lower limit saturation threshold is not optimal, based on an amount of change in the upper limit number of saturation layers and an amount of change in the lower limit number of saturation layers; and
set the decimal point position for each layer in the plurality of layers, based on a result of determination as to whether at least one of the upper limit saturation threshold or the lower limit saturation threshold is optimal.

8. An object detection program for causing a computer to:
subject fixed-length data, in which a decimal point position is set, to arithmetic processing corresponding to respective layers in a plurality of layers configuring a multilayer neural network to which an input image is input, the arithmetic processing being performed in accordance with a processing algorithm for the multilayer neural network;
in the arithmetic processing, count an upper limit number of saturations, which is a number of times that an upper limit value of a value range determined by the decimal point position is exceeded, and a lower limit number of saturations, which is a number of times that a lower limit value of the value range is not reached;
count an upper limit number of saturation layers, which is a number of layers in which the upper limit number of saturations is one or larger, and a lower limit number of saturation layers, which is a number of layers in which the lower limit number of saturations is one or larger;
change at least one of an upper limit saturation threshold, which is a threshold of the upper limit number of saturations, or a lower limit saturation threshold, which is a threshold of the lower limit number of saturations, when at least one of the upper limit saturation threshold or the lower limit saturation threshold is not optimal based on an amount of change in the upper limit number of saturation layers and an amount of change in the lower limit number of saturation layers; and
set the decimal point position for each layer in the plurality of layers, based on a result of determination as to whether at least one of the upper limit saturation threshold or the lower limit saturation threshold is optimal.

## Patentansprüche

1. Objekterkennungsvorrichtung (10), umfassend:
eine Objekterkennungsberechnungseinheit (12), die Daten fester Länge, in denen eine Dezimalpunktposition festgelegt ist, einer arithmetischen Verarbeitung unterzieht, die jeweiligen Schichten in einer Vielzahl von Schichten entspricht, die ein mehrschichtiges neuronales Netz konfigurieren, in das ein Eingangsbild eingegeben wird, wobei die arithmetische Verarbeitung gemäß einem Verarbeitungsalgorithmus für das mehrschichtige neuronale Netz durchgeführt wird;
einen Sättigungszähler (16), der bei der arithmetischen Verarbeitung eine obere Grenzanzahl von Sättigungen zählt, die eine Anzahl von Malen ist, die ein oberer Grenzwert eines durch die Dezimalpunktposition bestimmten Wertebereichs überschritten wird, und eine untere Grenzanzahl von Sättigungen zählt, die eine Anzahl von Malen ist, die ein unterer Grenzwert des Wertebereichs nicht erreicht wird;
einen Sättigungsschichtzähler (20), der eine obere Grenzanzahl von Sättigungsschichten zählt, die eine Anzahl von Schichten ist, in denen die obere Grenzanzahl von Sättigungen eins oder größer ist, und eine untere Grenzanzahl von Sättigungsschichten zählt, die eine Anzahl von Schichten ist, in denen die untere Grenzanzahl von Sättigungen eins oder größer ist;
eine Schwellenwertbestimmungseinheit (18), die basierend auf einem Änderungsbetrag der oberen Grenzanzahl von Sättigungsschichten und einem Änderungsbetrag der unteren Grenzanzahl von Sättigungsschichten, gezählt durch den Sättigungsschichtzähler, bestimmt, ob mindestens einer von einem oberen Grenzsättigungsschwellenwert, der ein Schwellenwert der oberen Grenzanzahl von Sättigungen ist, oder einem unteren Grenzsättigungsschwellenwert, der ein Schwellenwert der unteren Grenzanzahl von Sättigungen ist, optimal ist, und wenn bestimmt wird, dass mindestens einer von dem oberen Grenzsättigungsschwellenwert oder dem unteren Grenzsättigungsschwellenwert nicht optimal ist, ändert die Schwellenwertbestimmungseinheit mindestens einen von dem oberen Grenzsättigungsschwellenwert oder dem unteren Grenzsättigungsschwellenwert; und
eine Dezimalpunktpositionssteuereinheit (14), die die Dezimalpunktposition für jede Schicht in der Vielzahl von Schichten basierend auf einem Ergebnis der durch die Schwellenwertbestimmungseinheit durchgeführten Bestimmung festlegt.

2. Objekterkennungsvorrichtung (10) nach Anspruch 1, wobei die Schwellenwertbestimmungseinheit (18) anhand des Änderungsbetrags der oberen Grenzanzahl von Sättigungsschichten und des Änderungsbetrags der unteren Grenzanzahl von Sättigungsschichten bei der Objekterkennung, die durch die Objekterkennungsberechnungseinheit zweimal durchgeführt wird, bestimmt, ob der obere Grenzsättigungsschwellenwert und der untere Grenzsättigungsschwellenwert optimal sind.

3. Objekterkennungsvorrichtung (10) nach Anspruch 1 oder 2, wobei:
wenn mindestens einer von dem oberen Grenzsättigungsschwellenwert oder dem unteren Grenzsättigungsschwellenwert als nicht optimal bestimmt wird, die Schwellenwertbestimmungseinheit den mindestens einen von dem oberen Grenzsättigungsschwellenwert oder dem unteren Grenzsättigungsschwellenwert erhöht, und
wenn der obere Grenzsättigungsschwellenwert und der untere Grenzsättigungsschwellenwert als optimal bestimmt werden, die Dezimalpunktpositionssteuereinheit die Dezimalpunktposition basierend auf der oberen Grenzanzahl von Sättigungen und der unteren Grenzanzahl von Sättigungen bei einer Vielzahl von Objekterkennungsdurchläufen festlegt, die durch die Objekterkennungsberechnungseinheit (12) durchgeführt werden.

4. Objekterkennungsvorrichtung (10) nach Anspruch 3, wobei die Schwellenwertbestimmungseinheit (18) für jede Schicht in der Vielzahl von Schichten einen Erhöhungswert festlegt, um den der mindestens eine von dem oberen Grenzsättigungsschwellenwert oder dem unteren Grenzsättigungsschwellenwert, der als nicht optimal bestimmt wurde, erhöht werden soll.

5. Objekterkennungsvorrichtung (10) nach einem der Ansprüche 1 bis 4, wobei:
in mindestens einem Fall, in dem der Änderungsbetrag der oberen Grenzanzahl von Sättigungsschichten zwischen einer vorherigen und einer aktuellen Objekterkennung größer ist als ein oberer Grenzänderungsschwellenwert, oder in einem Fall, in dem der Änderungsbetrag der unteren Grenzanzahl von Sättigungsschichten zwischen der vorherigen und der aktuellen Objekterkennung größer ist als ein unterer Grenzänderungsschwellenwert, der Sättigungsschichtzähler bestimmt, dass ein Grad der Änderung in dem Eingangsbild hoch ist, und
wenn der Grad der Änderung in dem Eingangsbild als hoch bestimmt wird, die Schwellenwertbestimmungseinheit (18) die Dezimalpunktposition, den oberen Grenzsättigungsschwellenwert und den unteren Grenzsättigungsschwellenwert initialisiert.

6. Objekterkennungsvorrichtung (10) nach einem der Ansprüche 1 bis 5, ferner umfassend eine Änderungsparameterspeichereinheit (22), die eine Anzahl der Änderungen speichert, die an dem oberen Grenzsättigungsschwellenwert und dem unteren Grenzsättigungsschwellenwert vorgenommen wurden,
wobei, wenn die Anzahl der Änderungen eine vorbestimmte maximale Anzahl erreicht, die Schwellenwertbestimmungseinheit (18) den oberen Grenzsättigungsschwellenwert und den unteren Grenzsättigungsschwellenwert auf den oberen Grenzsättigungsschwellenwert und den unteren Grenzsättigungsschwellenwert ändert, bei denen der Änderungsbetrag der oberen Grenzanzahl von Sättigungsschichten und der Änderungsbetrag der unteren Grenzanzahl von Sättigungsschichten am geringsten ist.

7. Objekterkennungsverfahren, das einen Computer veranlasst zum:
Unterziehen von Daten fester Länge, in denen eine Dezimalpunktposition festgelegt ist, einer arithmetischen Verarbeitung, die jeweiligen Schichten in einer Vielzahl von Schichten entspricht, die ein mehrschichtiges neuronales Netz konfigurieren, in das ein Eingangsbild eingegeben wird, wobei die arithmetische Verarbeitung gemäß einem Verarbeitungsalgorithmus für das mehrschichtige neuronale Netz durchgeführt wird;
bei der arithmetischen Verarbeitung, Zählen einer oberen Grenzanzahl von Sättigungen, die eine Anzahl von Malen ist, die ein oberer Grenzwert eines durch die Dezimalpunktposition bestimmten Wertebereichs überschritten wird, und einer unteren Grenzanzahl von Sättigungen, die eine Anzahl von Malen ist, die ein unterer Grenzwert des Wertebereichs nicht erreicht wird;
Zählen einer oberen Grenzanzahl von Sättigungsschichten, die eine Anzahl von Schichten ist, in denen die obere Grenzanzahl von Sättigungen eins oder größer ist, und einer unteren Grenzanzahl von Sättigungsschichten, die eine Anzahl von Schichten ist, in denen die untere Grenzanzahl von Sättigungen eins oder größer ist;
Ändern von mindestens einem von einem oberen Grenzsättigungsschwellenwert, der oberen Grenzanzahl von Sättigungen ist, oder einem unteren Grenzsättigungsschwellenwert, der ein Schwellenwert der unteren Grenzanzahl von Sättigungen ist, wenn mindestens einer von dem oberen Grenzsättigungsschwellenwert oder dem unteren Grenzsättigungsschwllenwert nicht optimal ist, basierend auf einem Änderungsbetrag der oberen Grenzanzahl von Sättigungsschichten und einem Änderungsbetrag der unteren Grenzanzahl von Sättigungsschichten; und
Festlegen der Dezimalpunktposition für jede Schicht in der Vielzahl von Schichten basierend auf einem Ergebnis der Bestimmung, ob mindestens einer von dem oberen Grenzsättigungsschwellenwert oder der unteren Grenzsättigungsschwellenwert optimal ist.

8. Objekterkennungsprogramm, das einen Computer veranlasst zum:
Unterziehen von Daten fester Länge, in denen eine Dezimalpunktposition festgelegt ist, einer arithmetischen Verarbeitung, die jeweiligen Schichten in einer Vielzahl von Schichten entspricht, die ein mehrschichtiges neuronales Netz konfigurieren, in das ein Eingangsbild eingegeben wird, wobei die arithmetische Verarbeitung gemäß einem Verarbeitungsalgorithmus für das mehrschichtige neuronale Netz durchgeführt wird;
bei der arithmetischen Verarbeitung, Zählen einer oberen Grenzanzahl von Sättigungen, die eine Anzahl von Malen ist, die ein oberer Grenzwert eines durch die Dezimalpunktposition bestimmten Wertebereichs überschritten wird, und einer unteren Grenzanzahl von Sättigungen, die eine Anzahl von Malen ist, die ein unterer Grenzwert des Wertebereichs nicht erreicht wird;
Zählen einer oberen Grenzanzahl von Sättigungsschichten, die eine Anzahl von Schichten ist, in denen die obere Grenzanzahl von Sättigungen eins oder größer ist, und einer unteren Grenzanzahl von
Sättigungsschichten, die eine Anzahl von Schichten ist, in denen die untere Grenzanzahl von Sättigungen eins oder größer ist;
Ändern von mindestens einem von einem oberen Grenzsättigungsschwellenwert, der ein Schwellenwert der oberen Grenzanzahl von Sättigungen ist, oder einem unteren Grenzsättigungsschwellenwert, der ein Schwellenwert der unteren Grenzanzahl von Sättigungen ist, wenn mindestens einer von dem oberen Grenzsättigungsschwellenwert oder dem unteren Grenzsättigungsschwellenwert nicht optimal ist, basierend auf einem Änderungsbetrag der oberen Grenzanzahl von Sättigungsschichten und einem Änderungsbetrag der unteren Grenzanzahl von Sättigungsschichten; und
Festlegen der Dezimalpunktposition für jede Schicht in der Vielzahl von Schichten basierend auf einem Ergebnis der Bestimmung, ob mindestens einer von dem oberen Grenzsättigungsschwellenwert oder der unteren Grenzsättigungsschwellenwert optimal ist.

## Revendications

1. Un dispositif de détection d'objets (10), comprenant :
une unité de calcul de détection d'objets (12) qui soumet des données de longueur fixe, dans lesquelles la position du point décimal est définie, à un traitement arithmétique correspondant aux couches respectives d'une pluralité de couches constituant un réseau neuronal multicouche auquel une image d'entrée est fournie, le traitement arithmétique étant effectué conformément à un algorithme de traitement pour le réseau neuronal multicouche ;
un compteur de saturation (16) qui compte, lors du traitement arithmétique, un nombre de saturations à la limite supérieure, correspondant au nombre de fois où une valeur limite supérieure d'une plage de valeurs déterminée par la position du point décimal est dépassée, et un nombre de saturations à la limite inférieure, correspondant au nombre de fois où une valeur limite inférieure de la plage de valeurs n'est pas atteinte ;
un compteur de couches de saturation (20) qui compte un nombre de couches de saturation à la limite supérieure, qui est le nombre de couches dans lesquelles le nombre de saturations à la limite supérieure est supérieur ou égal à un, et un nombre de couches de saturation à la limite inférieure, qui est le nombre de couches dans lesquelles le nombre de saturations à la limite inférieure est supérieur ou égal à un ;
une unité de détermination du seuil (18) qui détermine si au moins l'un entre un seuil de saturation à la limite supérieure, qui est un seuil du nombre de saturations à la limite supérieure, ou un seuil de saturation à la limite inférieure, qui est un seuil du nombre de saturations à la limite inférieure, est optimal sur la base d'une quantité de variation du nombre de couches de saturation à la limite supérieure et d'une quantité de variation du nombre de couches de saturation à la limite inférieure comptées par le compteur de couches de saturation, et, lorsqu'elle détermine qu'au moins l'un du seuil de saturation à la limite supérieure ou du seuil de saturation à la limite inférieure n'est pas optimal, l'unité de détermination du seuil modifie au moins l'un du seuil de saturation à la limite supérieure ou du seuil de saturation à la limite inférieure ; et
une unité de contrôle de la position du point décimal (14) qui définit la position du point décimal pour chaque couche de la pluralité de couches, en se basant sur le résultat de la détermination effectué par l'unité de détermination du seuil.

2. Dispositif de détection d'objets (10) selon la revendication 1, dans lequel l'unité de détermination du seuil (18) détermine si le seuil de saturation à la limite supérieure et le seuil de saturation à la limite inférieure sont optimaux, en utilisant la quantité de variation du nombre de couches de saturation à la limite supérieure et la quantité de variation du nombre de couches de saturation à la limite inférieure dans la détection d'objets effectuée deux fois par l'unité de calcul de détection d'objets.

3. Dispositif de détection d'objets (10) selon la revendication 1 ou 2, dans lequel :
lorsqu'au moins l'un entre le seuil de saturation à la limite supérieure ou le seuil de saturation à la limite inférieure est déterminé comme n'étant pas optimal, l'unité de détermination du seuil augmente au moins l'un du seuil de saturation à la limite supérieure ou du seuil de saturation à la limite inférieure qui a été déterminé comme n'étant pas optimal, et
lorsque le seuil de saturation à la limite supérieure et le seuil de saturation à la limite inférieure sont déterminés comme optimaux, l'unité de contrôle de la position du point décimal règle la position du point décimal en fonction du nombre de saturations à la limite supérieure et du nombre de saturations à la limite inférieure au cours d'une pluralité d'opérations de détection d'objets effectuées par l'unité de calcul de détection d'objets (12).

4. Dispositif de détection d'objets (10) selon la revendication 3, dans lequel l'unité de détermination du seuil (18) définit, pour chaque couche parmi la pluralité de couches, une valeur d'augmentation par laquelle au moins l'un des seuils de saturation à la limite supérieure ou à la limite inférieure, déterminé comme n'étant pas optimal, doit être augmenté.

5. Dispositif de détection d'objets (10) selon l'une quelconque des revendications 1 à 4, dans lequel :
dans au moins l'un des cas suivants : celui où l'amplitude de variation du nombre de couches de saturation à la limite supérieure entre une détection d'objets précédente et une détection d'objets actuelle est supérieure à un seuil de variation de limite supérieure, ou celui où l'amplitude de variation du nombre de couches de saturation à la limite inférieure entre la détection d'objets précédente et la détection d'objets actuelle est supérieure à un seuil de variation de limite inférieure, le compteur de couches de saturation détermine que le degré de variation de l'image d'entrée est élevé, et
lorsque le degré de variation de l'image d'entrée est déterminé comme élevé, l'unité de détermination du seuil (18) initialise la position du point décimal, le seuil de saturation à la limite supérieure et le seuil de saturation à la limite inférieure.

6. Dispositif de détection d'objets (10) selon l'une quelconque des revendications 1 à 5, comprenant en outre une unité de stockage des paramètres de variation (22) qui enregistre un nombre de modifications apportées au seuil de saturation à la limite supérieure et au seuil de saturation à la limite inférieure,
dans lequel, lorsque le nombre de changements atteint un nombre maximal prédéterminé, l'unité de détermination du seuil (18) remplace le seuil de saturation à la limite supérieure et le seuil de saturation à la limite inférieure par les seuils de saturation à la limite supérieure et à la limite inférieure pour lesquels la quantité de variation du nombre de couches de saturation à la limite supérieure et de variation du nombre de couches de saturation à la limite inférieure sont minimales.

7. Procédé de détection d'objets pour faire exécuter les opérations suivantes par un ordinateur :
soumettre des données de longueur fixe, dans lesquelles la position du point décimal est définie, à un traitement arithmétique correspondant aux couches respectives d'une pluralité de couches constituant un réseau neuronal multicouche auquel est fournie une image d'entrée, le traitement arithmétique étant effectué conformément à un algorithme de traitement pour le réseau neuronal multicouche ;
dans le traitement arithmétique, compter un nombre de saturations à la limite supérieure, qui est le nombre de fois où une valeur limite supérieure d'une plage de valeurs déterminée par la position du point décimal est dépassée, et un nombre de saturations à la limite inférieure, qui est le nombre de fois où une valeur limite inférieure de la plage de valeurs n'est pas atteinte ;
compter un nombre de couches de saturation à la limite supérieure, qui est le nombre de couches dans lesquelles le nombre de saturations à la limite supérieure est supérieur ou égal à un, et un nombre de couches de saturation à la limite inférieure, qui est le nombre de couches dans lesquelles le nombre de saturations à la limite inférieure est supérieur ou égal à un ;
modifier au moins l'un des seuils de saturation à la limite supérieure, qui est un seuil du nombre de saturations à la limite supérieure, ou d'un seuil de saturation à la limite inférieure, qui est un seuil du nombre de saturations à la limite inférieure, lorsque au moins l'un des seuils de saturation à la limite supérieure ou de saturation à la limite inférieure n'est pas optimal, en se basant sur une quantité de variation du nombre de couches de saturation à la limite supérieure et une quantité de variation du nombre de couches de saturation à la limite inférieure ; et
définir la position du point décimal pour chaque couche de la pluralité de couches, sur la base d'un résultat de détermination quant à savoir si au moins l'un entre le seuil de saturation limite supérieur ou le seuil de saturation limite inférieur est optimal.

8. Programme de détection d'objets pour faire exécuter les opérations suivantes par un ordinateur :
soumettre des données de longueur fixe, dans lesquelles la position du point décimal est définie, à un traitement arithmétique correspondant aux couches respectives d'une pluralité de couches constituant un réseau neuronal multicouche auquel est fournie une image d'entrée, le traitement arithmétique étant effectué conformément à un algorithme de traitement pour le réseau neuronal multicouche ;
dans le traitement arithmétique, compter un nombre de saturations à la limite supérieure, qui est le nombre de fois où une valeur limite supérieure d'une plage de valeurs déterminée par la position du point décimal est dépassée, et un nombre de saturations à la limite inférieure, qui est le nombre de fois où une valeur limite inférieure de la plage de valeurs n'est pas atteinte ;
compter un nombre de couches de saturation à la limite supérieure, qui est le nombre de couches dans lesquelles le nombre de saturations à la limite supérieure est supérieur ou égal à un, et un nombre de couches de saturation à la limite inférieure, qui est le nombre de couches dans lesquelles le nombre de saturations à la limite inférieure est supérieur ou égal à un ;
modifier au moins l'un des seuils de saturation à la limite supérieure, qui est un seuil du nombre de saturations à la limite supérieure, ou d'un seuil de saturation à la limite inférieure, qui est un seuil du nombre de saturations à la limite inférieure, lorsque au moins l'un des seuils de saturation à la limite supérieure ou de saturation à la limite inférieure n'est pas optimal, en se basant sur une quantité de variation du nombre de couches de saturation à la limite supérieure et une quantité de variation du nombre de couches de saturation à la limite inférieure ; et
définir la position du point décimal pour chaque couche de la pluralité de couches, en se basant sur un résultat de détermination indiquant si au moins l'un du seuil de saturation limite supérieure ou du seuil de saturation limite inférieure est optimal.
